# EUROPEAN PATENT APPLICATION

(11) **EP 4 664 230 A1**
(43) Date of publication of application: **17.12.2025**
(21) Application number: 24181094.4
(22) Date of filing: 10.06.2024
(51) Int. Cl.: G05D 1/693, G05D 1/698, G05D 105/28, G05D 107/70, G05D 109/10

(54) **METHOD AND SYSTEM FOR IDENTIFYING TRAVEL BLOCKING SITUATIONS**

(71) Applicant: Kollmorgen Automation AB, 431 90 Mölndal (SE)
(72) Inventor: Åkerlund, Rasmus, 416 56 Göteborg (SE)
(74) Representative: Hansson Thyresson AB

(57) **Abstract**

The present invention relates to a method for identifying at least one travel blocking situation in a predefined set of travel paths for automated guided vehicles, AGV, the travel paths being defined by nodes and edges. The method comprises parsing at least a subset of the nodes of the predefined set of travel paths, identifying, in the parsed set of nodes, at least one travel rule associated with an outgoing edge from a parsed node, determining, for each identified travel rule, at least one node that, if occupied, triggers a travel restriction for an outgoing edge from the parsed node, forming a relevant state for each combination of a parsed node and at least one node determined to trigger a travel restriction associated with an outgoing edge of the parsed node, determining that a relevant state represents a travel blocking situation if each of the nodes forming the relevant state is connected to at least one outgoing edge that due to a triggered travel restriction, is unavailable for leaving the node.

## Description

### TECHNICAL FIELD

The present invention relates to a method for identifying travel blocking situations in travel paths for automated guided vehicles. The invention also relates to a computer program implementing the method.

### BACKGROUND

Automated guided vehicles (AGVs) are increasingly being used in various sectors such as warehouses, industrial plants, factories, hospitals, theme parks, etc. In most cases, these AGVs travel along predefined paths to move from one location to another, often with the purpose of transport objects, material, goods, etc. The paths are divided into segments of suitable length, forming a virtual road network. This network of path segments is logically represented by a graph, where the segments are defined by edges, and the start and end points of each segment are defined by nodes. Travel rules, also referred to as traffic rules, are set up to assist in controlling movement of the AGVs and allow them to move without colliding with each other. However, the AGVs can easily end up in a state where two or more AGVs block possible movements, such a travel blocking situation is sometimes referred as a deadlock. Currently, the way to detect these travel blocking situations is by simulation of the running system. This is a time-consuming task, and it cannot be guaranteed that all possible travel blocking situations have been verified. This means that new deadlock situations can occur after several years of operation.

From the above it is understood that there is room for improvements and the invention aims to solve or at least mitigate the above and other problems.

### SUMMARY

One object of the present invention is to reliably and efficiently identify travel blocking situations in an AGV system populated by a plurality of AGVs.

The object is achieved by means of a method according to claim 1, by means of a data processing system according to claim 13, and by means of a non-transitory computer-readable medium storing processor-executable instructions according to claim 15. Further embodiments of the invention are presented in the dependent claims.

More specifically, in a first aspect, according to some embodiments of the invention, a method for identifying at least one travel blocking situation in a predefined set of travel paths for automated guided vehicles, AGV, the travel paths being defined by nodes and edges, the method comprises parsing at least a subset of the nodes of the predefined set of travel paths, identifying, in the parsed set of nodes, at least one travel rule associated with an outgoing edge from a parsed node, determining, for each identified travel rule, at least one node that, if occupied, triggers a travel restriction for an outgoing edge from the parsed node, forming a relevant state for each combination of a parsed node and at least one node determined to trigger a travel restriction associated with an outgoing edge of the parsed node, determining that a relevant state represents a travel blocking situation if each of the nodes forming the relevant state is connected to at least one outgoing edge that due to a triggered travel restriction, is unavailable for leaving the node. An advantage of identifying travel blocking situations using this method is that the identification of travel blocking situations will be achieved in less time, especially compared to the generally used method of simulating the running of the AGV system and, thus, the movement of the AGVs. One reason for this faster identification of the travel blocking situations is the implementation of the concept of relevant states and then identifying travel blocking situations from these relevant states. Another advantage of the claimed invention is that the claimed method is more reliable than other methods because all possible scenarios for the traveling of the AGVs are systematically analyzed, which is not true for a simulation. A predefined set of travel paths may be any set of travel paths that are defined before the running of the method for identifying at least one travel blocking situation.

In some embodiments any determined travel blocking situation represented by a relevant state in which all of the outgoing edges of the nodes forming the relevant state are unavailable for leaving the relevant state represents an unescapable deadlock. One advantage of these features is that unescapable deadlocks are easily identified. Another advantage is that unescapable deadlocks are identified before AGVs get caught in one, i.e., before they occur. Further, by identifying unescapable deadlocks, the requirement of maintenance work will decrease because the identification of the unescapable deadlocks before such an unescapable deadlock situation occurs in reality makes it possible to redesign paths or travel directions of the AGV system to avoid the unescapable deadlock situation instead of relying on maintenance physically moving AGVs out of an unescapable deadlock situation.

In further embodiments any determined travel blocking situation represented by a relevant state in which any one of the outgoing edges of the nodes forming the relevant state are available for leaving the relevant state represents a route dependent deadlock. One advantage of these features is that route dependent deadlocks are easily identified. Another advantage is that route dependent deadlocks are identified before they occur. Further, by identifying route dependent deadlocks the travelling in the AGV system may be made more efficient by considering the implications of the route dependent deadlocks and possibly redesign paths or travel directions in order to avoid such route dependent deadlocks.

In yet some embodiments the step of determining that a relevant state represents a travel blocking situation includes counting, for each node forming the relevant state, the number of edges that are available for leaving the node or the number of edges that are unavailable for leaving the node in accordance with the associated travel rule. In this way it becomes easy to identify the type of travel blocking situation.

In some embodiments parsing at least a subset of the nodes includes parsing at least 90 percent of the nodes in the predefined set of travel paths.

In other embodiments parsing at least a subset of the nodes includes parsing all nodes in the predefined set of travel paths.

In some embodiments each edge in the set of travel paths connect a pair of nodes for travelling from one node to the other,
In further embodiments the travel rules are included in the predefined set of travel paths and specifies forbidden state transitions for various combinations of occupied nodes.

In some embodiments a relevant state is formed from two nodes. In further embodiments at least one relevant state is formed from the parsed node, hereinafter referred to as first state node, and one node, hereinafter referred to as second state node, determined to trigger a travel restriction associated with an outgoing edge of the first state node, wherein the method further comprises identifying at least one travel rule associated with an outgoing edge from the second state node, determining, for each identified travel rule, at least one node that, if occupied, triggers a travel restriction for an outgoing edge from the second state node, such at least one node is hereinafter referred to as third state node, forming an additional relevant state for a combination of the first state node, the second state node and the third state node. One advantage of these features is that the efficiency of identifying travel blocking situations in AGV systems for three simultaneously active AGVs is increased and the time required to identify possible travel blocking situations in such a system is substantially decreased.

In additional embodiments the step of forming a relevant state for each combination of a parsed node, hereinafter referred to as node 1, and at least one node, hereinafter referred to as node 2, determined to trigger a travel restriction associated with an outgoing edge of node 1, represents forming a relevant state of level 2, further comprising forming at least one relevant state of each level from level 3 to level N, wherein N is a valuer greater than 2 and wherein forming a relevant state of level x includes identifying at least one travel rule associated with an outgoing edge from a node x-1, determined during the forming of the relevant state of level x-1, determining, for each identified travel rule, at least one node x, that, if occupied, triggers a travel restriction for an outgoing edge from the node x-1, forming a relevant state of level x for a combination of nodes from a related relevant state of level x-1 and the node x. The advantage of this approach is that it allows efficient and fast identification of travel blocking situations in AGV systems intended to have more than two AGVs simultaneously traveling in the system.

Some embodiments further comprises determining that a relevant state is reachable if at least one node of the nodes forming the relevant state is connected to at least one incoming edge connecting the node to a departure node, which departure node is not one of the nodes forming the relevant state, and if travel along the incoming edge does not violate any travel rule based on the at least one other node of the relevant state being occupied. One advantage of this feature is that it reduces the number of identified travel blocking situations to handle in a process for resolving travel blocking situations or to consider for a person managing or designing the system.

According to a second aspect of the invention, a data processing system comprises a processor configured to perform the method according to any of the above-mentioned embodiments. The advantages relating to the above-mentioned embodiments also applies to the data processing system relating to the corresponding features.

In some embodiments the data processing system further comprises processors arranged in AGVs of the AGV system, wherein the data processing system is configured to distribute the performing of the method over a plurality of processors including processors arranged in AGVs of the AGV system.

According to a third aspect of the invention, a non-transitory computer-readable medium storing processor-executable instructions that, when executed by a processor, cause the processor to perform the method according to any one the above-mentioned embodiments. The advantages relating to the above-mentioned embodiments also applies to the non-transitory computer-readable medium storing processor-executable instructions relating to the corresponding features.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic view of at least a portion of a set of travel paths forming a travel network in an AGV system and show a situation requiring a travel rule to control the travel of the AGVs.
- Fig. 2: is a schematic view of a travel blocking situation referred to as an unescapable deadlock.
- Fig. 3: is a schematic view of a travel blocking situation referred to as a route dependent deadlock.
- Fig. 4a-c: is a flowchart describing a method for identifying travel blocking situations according to some embodiments of the invention.
- Fig. 5: is a flowchart describing an addition to the method of Fig. 4a-c according to some embodiments of the invention.

Further, in the figures like reference characters designate like or corresponding parts throughout the several figures.

### DETAILED DESCRIPTION

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

The embodiments of the invention may be utilized in a system of Automated Guided Vehicles, hereinafter referred to as AGVs, in which travelling paths are defined to connect different locations. The travelling paths are divided into segments that forms a network of segments that may be travelled by AGVs. This travel network of segments is logically represented by a graph, in which each segment is defined by two points, each being represented by a node, and at least one connection between these two nodes, the connection being represented by an edge. Each edge is associated with a start node, an end node, and a direction. The AGVs operating in such a travel network are controlled by controller software. The controller software may be running in a centralized server, the controller software may be distributed to be running on the AGVs, the controller software may be distributed over a plurality of servers, or any combination of these software distribution schemes. The control software is arranged to send control signals to the AGVs for guiding and driving each AGV through the travel network to a requested position. To facilitate the understanding of the invention the control software in any of the above-mentioned configurations will hereinafter be referred to as the controller, independent of whether the control software is executed centrally or distributed in some way. The controller may also be referred to as a fleet manager of the AGV system.

Further, edges may be associated with specific travel rules, sometimes referred to as traffic rules, specifying situations, e.g., occupied nodes or edges, when the edge associated with the travel rule is not allowed to be used for traveling. For example, the travel rule may constrain possible travel routes from a specific node via an edge from that node if the edge is already occupied by an AGV or if the node connected to the other end of the edge is already occupied.

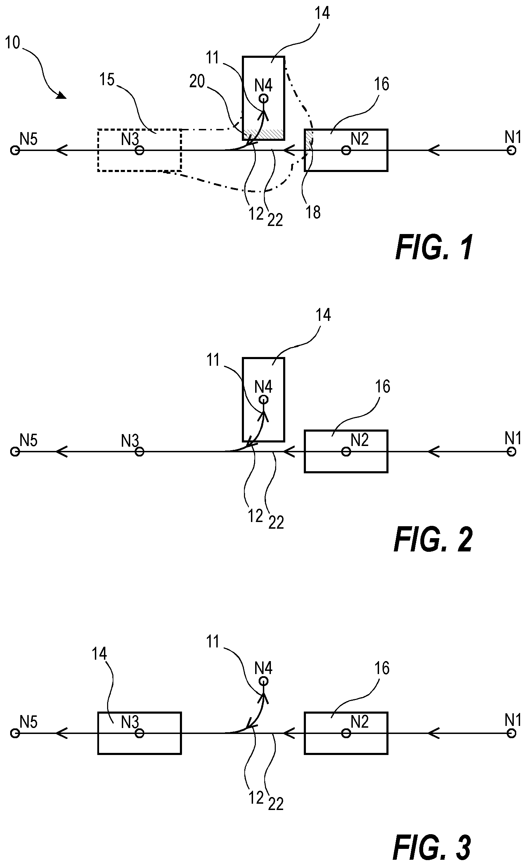

An example situation in a travel network 10 requiring a travel rule is depicted in Fig. 1. The travel network is represented by nodes N1-N5, and node N4 should be understood as a node only connected to the travel network by two edges 11 and 12, edge 11 being associated with the direction from N3 to N4 and the edge 12 being associated with the direction from N4 to N3. Nodes N1 and N5 may be connected to other nodes not shown in the figure. One AGV 14 is present on node N4 and one AGV 16 is present on node N2. The figure also depicts the space occupied by the AGV 14 when driving to, via edge 11, and from, via edge 12, node N4, marked by the dash-dotted line in the figure. The AGV 14 when moved to node N3 is depicted by the dashed box 15. Hence, when AGV 14 drives from or to node N4 and an AGV, in the figure AGV 16, is positioned on none N2, AGV 14 will collide with AGV 16, showed by the hashed area 18 indicating the overlap of the area covered by the AGV 14 and the physical boundaries of AGV 16. To avoid such collisions a travel rule is associated with each of the edge 11 and the edge 12. These travel rules would not allow an AGV positioned at node N4 to travel to node N3 or an AGV positioned at node N3 to travel to node N4 if node N2 is occupied. Accordingly, an AGV positioned on node N4 is blocked from driving to node N3 by an AGV positioned on node N2 and an AGV positioned on node N3 is blocked from driving to node N4 by an AGV positioned on node N2.

Further, the driving of AGV 16 from node N2 to node N3 will also result in a collision because the AGV 16 will pass over the hashed area 20 of the space occupied by the AGV 14. Hence, a travel rule hindering an AGV to travel from node N2 to node N3 when node N4 is occupied by an AGV is associated with edge 22 between node N2 and node N3. Notice that the edge 22 between node N2 and node N3 is associated with the direction from N2 to N3.

One specific travel blocking situation, referred to as an unescapable deadlock henceforth, is depicted in Fig. 2. As discussed in connection with Fig. 1 edges 12 and 22 are associated with traveling rules hindering AGV 14 and AGV 16, respectively, to move. More specifically, AGV 14 is at a node N4 with no other edges than edge 12 to travel via and AGV 16 is positioned at a node also having only one edge to travel along. Both of these edges 12 and 22 are blocked in the depicted situation and, therefore, according to the travel rules of these edges, no one of the AGVs 14 and 16 are allowed to move at all. A situation like this, in which there is no possibility for any of the AGVs to move is, thus, referred to as an unescapable deadlock.

There are also travel blocking situations leaving at least one edge available for travel. For example, see Fig. 3, the AGV 16 at node N2 is not allowed to proceed to node N3, because node N3 is occupied. Further, the AGV 14 is not allowed to proceed to node N4, because AGV 16 is blocking the way as discussed earlier. However, AGV 14 can move to node N5. Accordingly, the AGVs may not be able to travel according to plan and a new route for at least one of the AGVs may have to be generated. Thus, the situation is referred to as route dependent deadlock, because all the routes are not blocked so a rerouting is possible.

The travel network should be designed not to introduce unnecessary blockages or deadlocks for the AGVs driving in the travel network, i.e., to avoid situations such as the ones described above to occur during operation of AGVs in a travel network. To assist in avoiding deadlock situations occurring during operations of AGV travel networks, possible deadlock situations may be identified in the network.

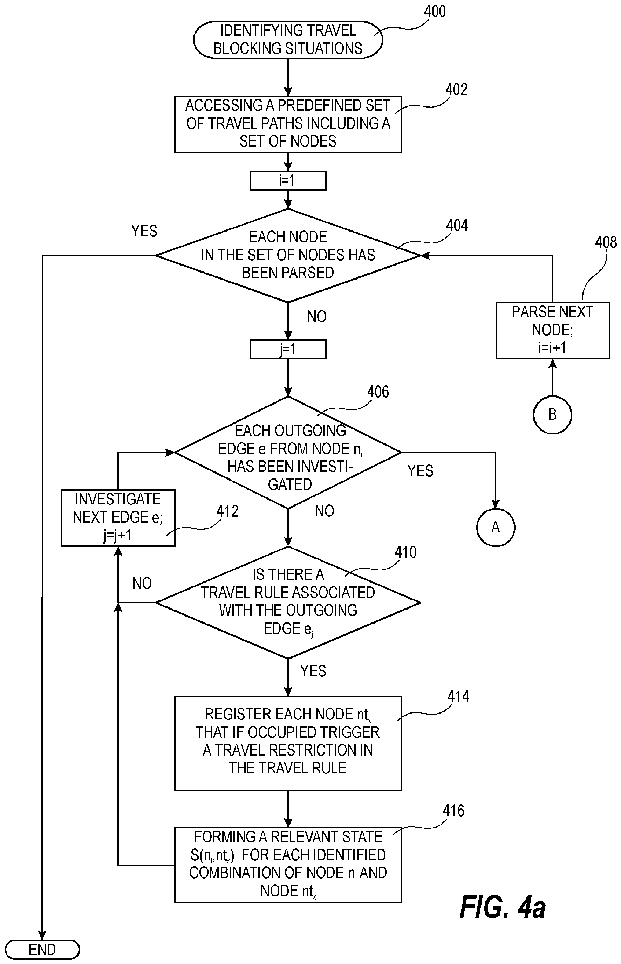

Now referring to Fig. 4a-c, presenting a flowchart describing an example of a method for identifying travel blocking situations, 400, according to at least some embodiments of the invention. The method is arranged to operate on a description of the travel network and the travel paths therein. This description includes at least nodes, edges, and travel rules.

The method starts by accessing the description of a predefined travel network, step 402. Each node in the set of travel paths is then parsed until all nodes of the set of travel paths have been parsed, step 404. If not all nodes of the set of travel paths have been parsed the method starts parsing a node nᵢ from the set of travel paths. The parsing of the node nᵢ includes investigating each outgoing edge eⱼ from the presently processed node nᵢ, step 406. If all outgoing edges eⱼ from the presently processed node nᵢ have been investigated then the process continues to step 418 to investigate relevant states S(nᵢ, ntₓ) that possibly have been identified and registered, wherein the set of nodes nt includes all nodes that trigger a travel restriction of an outgoing edge from node nᵢ. If all outgoing edges from the presently processed node nᵢ have not been investigated, then an outgoing edge eⱼ is checked to see if a travel rule is associated with the edge eⱼ, step 410. If no travel rule is associated with the edge eⱼ then the next edge eⱼ₊₁ is to be investigated, steps 412 and 406. However, if a travel rule is found associated with the edge e;, step 410, then each node ntₓ that if occupied trigger a travel restriction in the travel rule is registered, step 414, and for each such node ntₓ, in combination with the presently parsed node nᵢ, a relevant state S(nᵢ, ntₓ) is formed, step 416. Then, after possibly forming one relevant state or a plurality of relevant states in step 416, the next outgoing edge eⱼ₊₁ of the parsed node nᵢ is to be investigated, steps 412 and 406, if there are any further outgoing edges to investigate. Accordingly, there is not necessarily a relevant state based on the node nᵢ and the edge eⱼ, because there may exist traveling rules associated with an edge that is not dependent on another node being occupied.

As mentioned previously, in relation to step 406, when all outgoing edges e; of the presently investigated node nᵢ have been checked for travel restrictions and all, if any, relevant states S(nᵢ, ntₓ) for the presently investigated node nᵢ have been identified, the process continues by investigating the relevant states S(nᵢ, ntₓ) found for the node nᵢ. If at least one relevant state S(nᵢ, ntₓ) have been identified for then presently parsed node nᵢ and if not all relevant states S(nᵢ, ntₓ) for the node nᵢ and edge eⱼ has been investigated, step 418, then the process continues by setting up for investigating the next relevant state or, if no relevant state has been investigated yet, setting up for investigating an initial relevant state, step 419. The process continues by checking if all outgoing edges e from the nodes nᵢ of the relevant state S(nᵢ, ntₓ) have been investigated, step 420. If not all outgoing edges e, wherein e is representing the full set of outgoing edges from a node, from the node nᵢ of the relevant state S(nᵢ, ntₓ) have been investigated, an outgoing edge e; from the node n; and the associated travel rule, if any, is checked to determine if the edge eⱼ is available for leaving the node nᵢ of the relevant state S(nᵢ, ntₓ), step 422. If the presently checked outgoing edge eⱼ is available for leaving the node nᵢ of the relevant state S(nᵢ, ntₓ), step 424, then the edge eⱼ is possible to travel and the edge eⱼ is flagged as "legal" in the respect of the relevant state, step 426, i.e. the edge is not blocked in the presently processed relevant state. If the presently checked outgoing edge eⱼ is not available for leaving the edge eⱼ is flagged as "illegal" in respect of the relevant state, step 427, indicating that the edge eⱼ is blocked and not allowed to travel in the presently processed relevant state. Independent of whether the edge eⱼ has been flagged as legal or illegal the process then continues to step 428 and step 420 for processing of the next edge eⱼ₊₁. If all outgoing edges have been investigated in step 420, then the process continues to step 430 for investigating the outgoing edges of the node ntₓ of the relevant state S(nᵢ, ntₓ). If not all outgoing edges from node ntₓ have been investigated, then the outgoing edge etₖ from node ntₓ of the relevant state S(nᵢ, ntₓ) and associated travel rules are investigated to find out if the outgoing edge etₖ is available for leaving node ntₓ, step 432. If the presently checked outgoing edge etₖ is available for leaving the node ntₓ of the relevant state S(nᵢ, ntₓ), step 434, then the edge etₖ is possible to travel and the edge etₖ is flagged as "legal" in the respect of the relevant state, step 436, i.e. the edge etₖ is not blocked in the presently processed relevant state. If the presently checked outgoing edge etₖ is not available for leaving the node ntₓ the edge etₖ is flagged as "illegal" in respect of the relevant state, step 437, indicating that the edge etₖ is blocked and not allowed to travel in the presently processed relevant state. Independent of whether the edge etₖ has been flagged as legal or illegal the process then continues to step 438 and step 430 for processing of the next edge etₖ₊₁. If all outgoing edges have been investigated in step 430, then the process checks if all outgoing edges et from ntₓ are legal, step 440. If all outgoing edges et from ntₓ have been flagged as legal then the relevant state S(nᵢ, ntₓ) is deemed not being a deadlock, step 442, and the process returns via D to step 418 for processing of the next relevant state S(nᵢ, ntₓ). If not all outgoing edges e and et from ntₓ have been flagged as legal then the process checks if all outgoing edges e and et from nodes n; and ntₓ of the presently processed relevant state S(nᵢ, ntₓ) have been flagged as illegal, step 444. If not all outgoing edges e and et have been flagged as illegal then the relevant state S(nᵢ, ntₓ) is registered as a route dependent deadlock, step 446, and the process returns via D to step 418 for processing of the next relevant state S(nᵢ, ntₓ). However, if all outgoing edges e and et have been flagged as illegal then the relevant state S(nᵢ, ntₓ) is registered as an unescapable deadlock, step 448, and the process returns via D to step 418 for processing of the next relevant state S(nᵢ, ntₓ).

If all nodes nᵢ of the predefined set of travel paths have been parsed, then the possible travel blocking situations of the predefined set of travel paths have been identified and the process of identifying travel blocking situations for the predefined set of travel paths is ended.

Identified travel blocking situations and in particular unescapable deadlocks and route dependent deadlocks may be used for improving the design of the travel paths of the examined AGV system. For this purpose, the identified travel blocking situations may be provided to an AGV system design tool for automatic adjustment of the travel paths or to a user of an AGV system design tool for manual adjustment of the travel paths. Yet another use of the identified travel blocking situations may be to provide them as input to a controller, e.g., a fleet manager, controlling the AGV system having the predefined set of travel paths. Providing the identified travel blocking situations to the controller may be performed in setting up the AGV system or when the AGV system is up and running. By providing the identified travel blocking situations to the controller the control of the traffic in the AGV system may be directed and controlled more intelligently and the controller may be proactive in controlling the travel of the AGVs in the system.

In some embodiments of the invention the method is arranged to identify travel blocking situations involving more than two AGVs. In order to facilitate the description of such embodiments relevant states of various levels are introduced. For the above-described method relating to identifying travel blocking situations involving two AGVs the relevant states identified is of level two. For an identified blocking situation involving three AGVs the relevant state is of level three, for four AGVs the relevant state is of level four, etc.

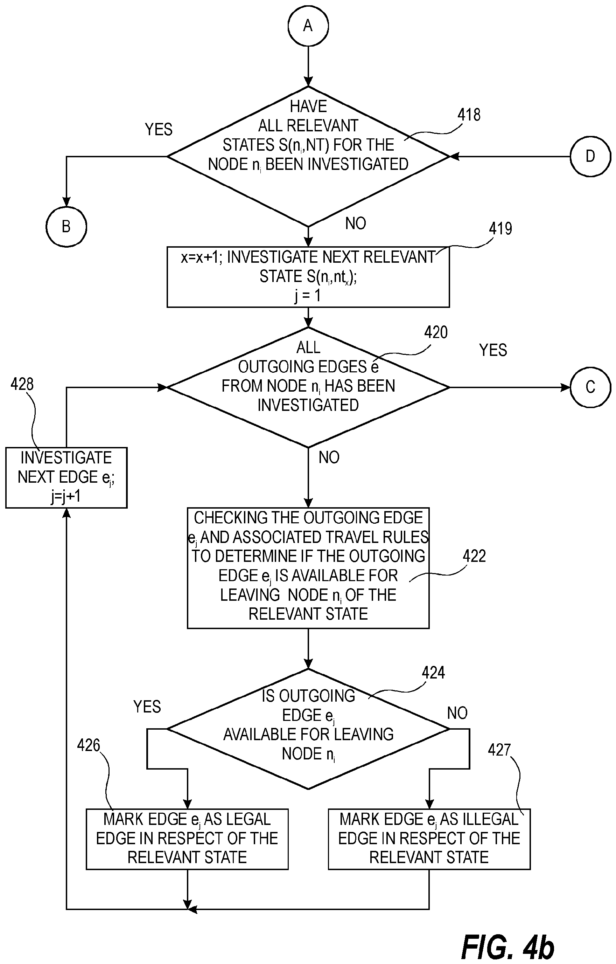

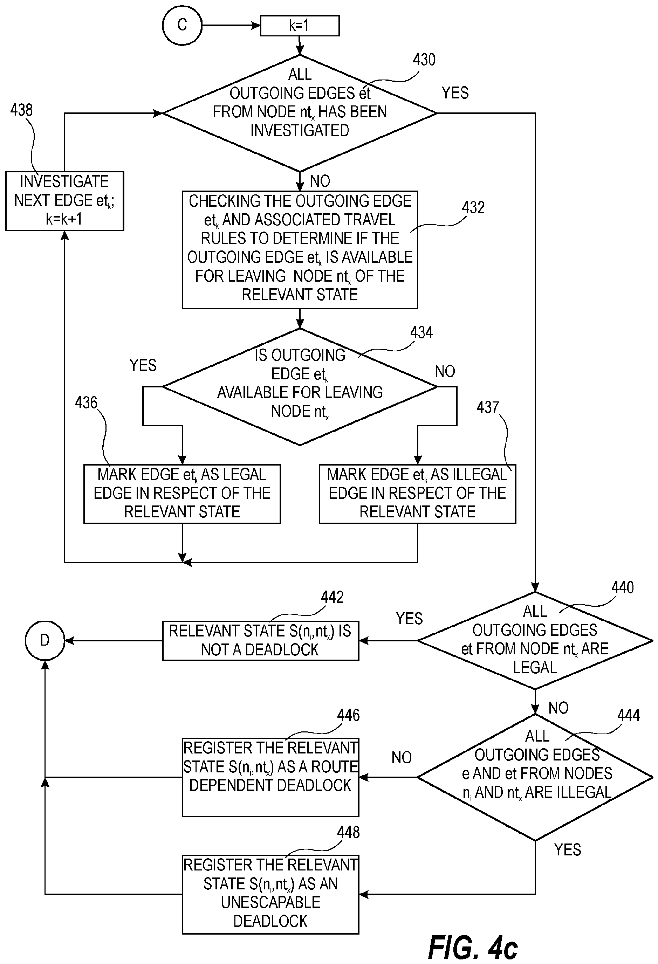

According to some embodiments, the identification of higher-level relevant states, i.e., higher than two, may be based on the method described in connection with Fig. 4a-c. In general, such a method may utilize the already identified relevant states S(nₐ, n_{b}). The method then may be arranged to look for travel rules associated with an outgoing edge from node n_{b} and which travel rules trigger a travel restriction if a node n_{c} is occupied, wherein a ≠ b ≠ c. Each such node n_{c} found is then forming a level three relevant state S(nₐ, n_{b}, n_{c}) based on the level two relevant state S(nₐ, n_{b}). Then, according to some embodiments, the process described in connection with Figs 4a-b may be applied to the three nodes of the level three relevant state by checking the outgoing edges and associated travel rules of each of the nodes nₐ, n_{b}, and n_{c}, in a manner corresponding to the process in, e.g., Figs 4b and 4c. Finally, the determination if a relevant state S(nₐ, n_{b}, n_{c}) of level three represents no deadlock, a route dependent deadlock, or an unescapable deadlock may be implemented in a corresponding way as in steps 440-448 in Fig 4c. For example, if all outgoing edges from the nodes nₐ, n_{b}, and n_{c} are illegal, i.e. not allowed to travel via when the system is in the relevant state S(nₐ, n_{b}, n_{c}), then the relevant state S(nₐ, n_{b}, n_{c}) is an unescapable deadlock of level three and will be registered. If, for example, any one of the edges from the nodes nₐ, n_{b}, and n_{c} are legal, then the relevant state of level three is a route dependent deadlock of level three and will be registered.

In some embodiments the method will, when operating on level three or higher level relevant states, not proceed to process a relevant state at a higher level if the relevant state of the relevant state of the lower level was identified as an unescapable deadlock. For example, if relevant state S(nₐ, n_{b}) was identified as an unescapable deadlock then the state S(nₐ, n_{b}, n_{c}) will not be processed, because the subset of nodes already represents an unescapable deadlock.

This, process may then be extended to apply for systems including four and more AGVs by checking for relevant states of a level up to the number of AGVs of the system in a corresponding way.

In some embodiments an additional investigation to each relevant state S(nₐ, n_{b}) is performed in which the relevant states S(nₐ, n_{b}) are investigated to determine if the relevant state S(nₐ, n_{b})is reachable or not. For such an investigation the incoming edges of each node of the relevant state S(nₐ, n_{b}) are inspected. An edge is identified as available if the start node for the edge is not part of the relevant state and if traveling along the edge does not violate any travel rules, based on the other nodes of the relevant state S(nₐ, n_{b}) being occupied. The relevant state is determined to be reachable if at least one of the nodes of the relevant state S(nₐ, n_{b}) connects to an incoming edge that is available.

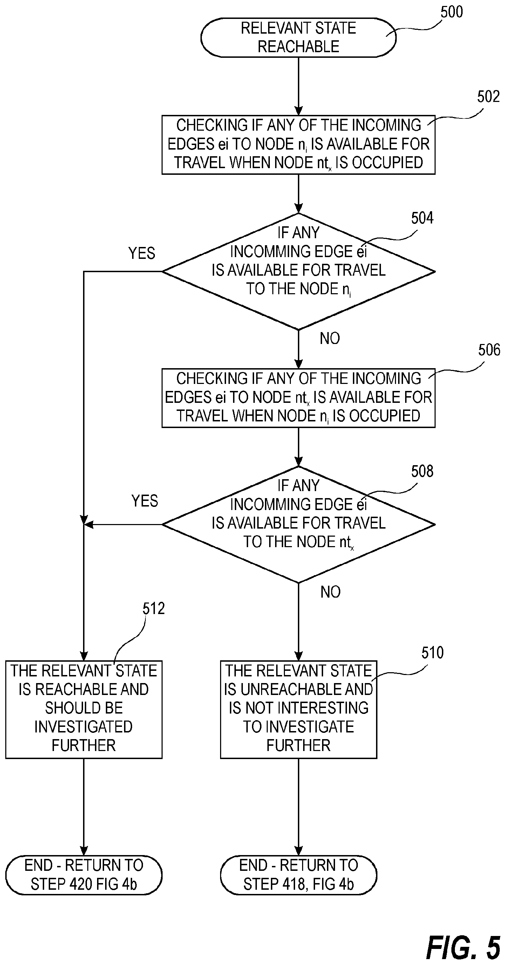

Now referring to Fig. 5, describing an embodiment of the method relating to the additional investigation of each relevant state being reachable or not, step 500. The method described in view of Fig. 5 relates to a system including two operational AGVs. However, the method may be implemented for a system including additional operational AGVs. If a relevant state is not reachable, then there is no need to investigate further if the relevant state represents an unescapable deadlock, a route dependent deadlock, or none of these deadlock types. The process of the investigation to whether a relevant state is reachable or not may be introduced between step 419 and step 420 of the method described in connection with Figs 4a-c. The method begins with investigating the presently investigated relevant state S(nᵢ, ntₓ) by checking if any of the incoming edges ei to node nᵢ is available for travel when node ntₓ is occupied, step 502. If no such incoming edges is available for travel to node nᵢ, step 504, then the process continue to check if any of the incoming edges ei to node ntₓ is available for travel when node nᵢ is occupied, step 506. If no such incoming edges is available for travel to node ntₓ, step 508, then the process continue by determining that the relevant state S(nᵢ, ntₓ) is unreachable and the relevant state does not have to be investigated further in regard of representing an unescapable deadlock, a route dependent deadlock, no deadlock etc., because the relevant state is unreachable 510. The process then returns to step 418, in Fig. 4b, for investigating the next relevant state S(nᵢ, ntₓ), if there are further relevant states to investigate. If, however, an incoming edge ei is available for travel to the node n; from a node not being part of the investigated relevant state S(nᵢ, ntₓ), i.e. not being node ntₓ, step 504, or if an incoming edge ei is available for trave to the node ntx from a node not being part of the investigated relevant state S(nᵢ, ntₓ), i.e. not being node nᵢ, step 508, then the relevant state S(nᵢ, ntₓ) is determined to be reachable, step 512, and is to be further investigated. Therefore, the process returns to step 420, in Fig. 4b, to continue investigating the blocking status of the relevant state, e.g., if the relevant state represents an unescapable deadlock, a route dependent deadlock, or none of these deadlock types.

The embodiments of the method including process of determining if the relevant state is reachable or not may also be implemented in a system including relevant states of higher level than two. In such implementations each node of the relevant state may be checked as described for the individual nodes in relation to Fig. 5.

The method for identifying at least one travel blocking situation may be performed or executed in a planning and/or design stage of an AGV system. In such cases the method may be applied to a received predefined set of travel paths. The predefined set of travel paths may be generated in a planning tool or a design tool used for plan or design AGV systems.

The method for identifying at least one travel blocking situation may also or alternatively be performed or executed for a running AGV system. To check a fully operating and running AGV system for travel blocking situations is possible because the relatively short time span required for identifying the travel blocking situation using the method for identifying at least one travel blocking situation. The predefined set of travel paths may then be a snapshot of the travel paths in the system which then are processed by the method, or the predefined set of travel paths may be a revised set of travel paths. In this way changes to the AGV system or changes to conditions in the AGV system, e.g. changed or added travel paths and/or travel rules, may be analyzed for travel blocking situations before the system experience such a situation in reality. For example, registered unescapable deadlocks and route dependent deadlocks may be transferred to the controller, e.g., a fleet manager, a traffic manager etc., and be used in the controller to plan travel routes or manage the traffic.

The controller may be easier to design and may provide improved AGV guidance if identified travel blocking situations like the unescapable deadlock or the route dependent deadlock are received and accounted for in the controller.

The various embodiments described above are provided by way of illustration only and should not be construed to limit the invention. For example, the principles herein may be applied to any remotely controlled device. Those skilled in the art will readily recognize various modifications and changes that may be made to the present invention without following the example embodiments and applications illustrated and described herein, and without departing from the scope of the present disclosure.

## Claims

1. Method for identifying at least one travel blocking situation in a predefined set of travel paths for automated guided vehicles, AGV, the travel paths being defined by nodes and edges, the method comprising:
parsing at least a subset of the nodes of the predefined set of travel paths,
identifying, in the parsed set of nodes, at least one travel rule associated with an outgoing edge from a parsed node,
determining, for each identified travel rule, at least one node that, if occupied, triggers a travel restriction for an outgoing edge from the parsed node,
forming a relevant state for each combination of a parsed node and at least one node determined to trigger a travel restriction associated with an outgoing edge of the parsed node,
determining that a relevant state represents a travel blocking situation if each of the nodes forming the relevant state is connected to at least one outgoing edge that due to a triggered travel restriction, is unavailable for leaving the node.

2. Method according to claim 1, wherein any determined travel blocking situation represented by a relevant state in which all of the outgoing edges of the nodes forming the relevant state are unavailable for leaving the relevant state represents an unescapable deadlock.

3. Method according to any one of claims 1-2, wherein any determined travel blocking situation represented by a relevant state in which any one of the outgoing edges of the nodes forming the relevant state are available for leaving the relevant state represents a route dependent deadlock.

4. Method according to any one of claims 1-3, wherein the step of determining that a relevant state represents a travel blocking situation includes counting, for each node forming the relevant state, the number of edges that are available for leaving the node or the number of edges that are unavailable for leaving the node in accordance with the associated travel rule.

5. Method according to any one of claims 1-4, wherein parsing at least a subset of the nodes includes parsing at least 90 percent of the nodes in the predefined set of travel paths.

6. Method according to any one of claims 1-5, wherein parsing at least a subset of the nodes includes parsing all nodes in the predefined set of travel paths.

7. Method according to any one of claims 1-6, wherein each edge in the set of travel paths connect a pair of nodes for travelling from one node to the other,

8. Method according to any one of claims 1-7, wherein the travel rules are included in the predefined set of travel paths and specifies forbidden state transitions for various combinations of occupied nodes.

9. Method according to any one of claims 1-8, wherein a relevant state is formed from two nodes.

10. Method according to any one of claims 1-8, wherein, at least one relevant state is formed from the parsed node, hereinafter referred to as first state node, and one node, hereinafter referred to as second state node, determined to trigger a travel restriction associated with an outgoing edge of the first state node, wherein the method further comprises:
identifying at least one travel rule associated with an outgoing edge from the second state node,
determining, for each identified travel rule, at least one node that, if occupied, triggers a travel restriction for an outgoing edge from the second state node, such at least one node is hereinafter referred to as third state node,
forming an additional relevant state for a combination of the first state node, the second state node and the third state node.

11. Method according to any one of claims 1-8, wherein the step of forming of a relevant state for each combination of a parsed node, hereinafter referred to as node 1, and at least one node, hereinafter referred to as node 2, determined to trigger a travel restriction associated with an outgoing edge of node 1, represents forming a relevant state of level 2, further comprising forming at least one relevant state of each level from level 3 to level N, wherein N is a valuer greater than 2 and wherein forming a relevant state of level x includes:
identifying at least one travel rule associated with an outgoing edge from a node x-1, determined during the forming of the relevant state of level x-1,
determining, for each identified travel rule, at least one node x, that, if occupied, triggers a travel restriction for an outgoing edge from the node x-1,
forming a relevant state of level x for a combination of nodes from a related relevant state of level x-1 and the node x.

12. Method according to any one of claims 1-11, further comprising determining that a relevant state is reachable if at least one node of the nodes forming the relevant state is connected to at least one incoming edge connecting the node to a departure node, which departure node is not one of the nodes forming the relevant state, and if travel along the incoming edge does not violate any travel rule based on the at least one other node of the relevant state being occupied.

13. A data processing system comprising a processor configured to perform the method of any one of claims 1-12.

14. The data processing system according to claim 13, further comprising processors arranged in AGVs of the AGV system, wherein the data processing system is configured to distribute the performing of the method over a plurality of processors including processors arranged in AGVs of the AGV system.

15. A non-transitory computer-readable medium storing processor-executable instructions that, when executed by a processor, cause the processor to perform the method according to any one of claims 1-12.
